# EUROPÄISCHE PATENTSCHRIFT

(11) **EP 1 566 018 B1**
(45) Veröffentlichungstag und Bekanntmachung des Hinweises auf die Patenterteilung: **15.03.2006**
(21) Anmeldenummer: 03785537.6
(22) Anmeldetag: 25.11.2003
(51) Int. Cl.: H04L 12/28

(54) **VERFAHREN ZUM AUTOMATISCHEN KONFIGURIEREN VON KOMMUNIKATIONSBEZIEHUNGEN ZWISCHEN IN EINEM PAKETORIENTIERTEN KOMMUNIKATIONSNETZ ANGEORDNETEN KOMMUNIKATIONSEINHEITEN**
METHOD FOR THE AUTOMATIC CONFIGURATION OF COMMUNICATION RELATIONSHIPS BETWEEN COMMUNICATION UNITS SITUATED IN A PACKET-ORIENTED COMMUNICATIONS NETWORK
PROCEDE DE CONFIGURATION AUTOMATIQUE DE LIAISONS DE COMMUNICATION ENTRE DES UNITES DE COMMUNICATION DISPOSEES DANS UN RESEAU DE COMMUNICATION PAR PAQUETS

(30) Priorität: 26.11.2002 DE 10255159
(43) Veröffentlichungstag der Anmeldung: 24.08.2005
(73) Patentinhaber: SIEMENS AKTIENGESELLSCHAFT, 80333 München (DE)
(72) Erfinder: BAHLS, Thomas, 17489 Greifswald (DE); PRÄGER, Frank, 17491 Greifswald (DE)
(86) Internationale Anmeldenummer: PCT/DE2003/003898
(87) Internationale Veröffentlichungsnummer: WO 2004/049629

(56) Entgegenhaltungen:
- EP-A- 1 059 767
- WO-A-01/19080
- US-A1- 2002 120 720
- US-B1- 6 377 990

## Beschreibung

Im Rahmen der Optimierung von aktuellen Kommunikationsnetzen, insbesondere von breitbandigen Teilnehmerzugangsnetzen - auch als Access Networks bezeichnet - soll einer großen Anzahl von Teilnehmern kostengünstig der Zugang sowohl zu Schmalband- als auch zu Breitband-Diensten - z.B. Video-On-Demand - sichergestellt werden. Im Zuge der Optimierung kann der technologische und wirtschaftliche Aufwand zur Realisierung von in aktuellen Kommunikationsnetzen anordenbaren Netzeinrichtungen durch den Einsatz von nicht speziell für breitbandige Teilnehmerzugangsnetze sondern für Massenmärkte entwickelte Technologien (z.B. Personalcomputer) reduziert werden. Als Beispiel für eine solch weitverbreitete und entsprechend weiterentwickelte Technologie sei das gemäß dem IEEE-Standard 802.3 standardisierte "Ethernet" erwähnt, welches ein rahmen- bzw. paketorientiertes und verbindungsloses Übertragungsverfahren bereitstellt. Bei in aktuellen Kommunikationsnetzen anordenbaren Netzeinrichtungen wie z.B. Multiplexeinrichtungen ist es bekannt, beispielsweise gemäß dem asynchronen Transfermodus - ATM - ausgestaltete Datenzellen - auch als ATM-Zellen bezeichnet - als auch zeitschlitzorientierte Informationen (z.B. TDM- bzw. PCM-Strukturen, Pulse Code Modulation) über ein lokal in der Netzeinrichtung angeordnetes Ethernet zwischen in der Netzeinrichtung angeordneten , dezentralen Teilnehmeranschlussbaugruppen und zumindest einer zentrale Funktionen aufweisenden, zentralen Einheit bzw. Baugruppe zu vermitteln. Das Ethernet kann sowohl als "Verdrahtung" bzw. "Backplane" in einem Baugruppenträger zur Überbrückung kleinerer Entfernungen als auch als flächendeckendes Kommunikationsnetz zur Überbrückung größerer Entfernungen eingesetzt werden.

Beim Übergang von traditionellen, leitungsvermittelnden bzw. zeitschlitzorientierten Kommunikationsnetzen auf paketorientierte Kommunikationsnetze insbesondere auf Kommunikationsnetze gemäß dem IEEE-Standard 802.3, bringt der Wechsel des Übertragungsverfahrens auch Änderungen bei der Adressierung und Konfiguration der beteiligten Systemkomponenten mit sich. In aktuellen Kommunikationsnetzen wird häufig folgende Systemstruktur verwendet:
- eine zentrale Baugruppe - im folgenden auch zentrale Kommunikationseinrichtung bezeichnet - mit mehreren zugeordneten beispielsweise Ethernet-Schnittstellen bereitstellenden Kommunikationseinheiten - im folgenden auch als Wandlerbausteine bezeichnet -, welche über eine zentrale Vermittlungseinrichtung - z.B. Ethernet-Switch - an ein paketorientiertes Kommunikationsnetz - z.B. Ethernet - angeschlossen sind,
- mehrere dezentrale Baugruppen - im folgenden auch als dezentrale Kommunikationseinrichtungen bezeichnet - welche ebenfalls zumindest eine jeweils eine Ethernet-Schnittstelle bereitstellende Kommunikationseinheit - Wandlerbaustein - umfasst, wobei die zumindest eine Kommunikationseinheit über eine Vermittlungseinrichtung - hier Ethernet-Switch - an das Kommunikationsnetz und über dieses an die zentrale Kommunikationseinrichtung angeschlossen ist.

Bei der oben beschriebenen Systemstruktur besteht die Aufgabe, eine funktionale Inbetriebnahme der Anordnung bzw. des Systems - booten, hochzufahren -in der Art und Weise zu ermöglichen, dass zwischen jeweils einer dezentralen und der zentralen Baugruppe zugeordneten Kommunikationseinheiten bzw. Wandlerbausteinen eine logische Punkt-zu-Punkt-Verbindung eingerichtet wird.

Eine herkömmliche Lösungsmöglichkeit besteht darin, mittels an die Kommunikationseinrichtungen anschließbarer, lokaler Management-Konsolen die individuelle Konfiguration der jeweiligen Punkt-zu-Punkt-Verbindungen über das Kommunikationsnetz einzustellen. In einem räumlich ausgedehnten System mit vielen abgesetzten Kommunikationseinrichtungen ist dies jedoch vom Netzwerkbetreiber wegen des erhöhten Aufwandes nicht durchführbar. Die alternative Möglichkeit einer Festkonfiguration ist ebenfalls nicht möglich, da die Zuordnung dynamisch erfolgen soll.

Weiterhin offenbart Dokument US-B1-6377990 ein System bestehend aus einem Kommunikationsnetz, in welchem sich ein Gateway und eine Vielzahl von Servern sich befinden. Für die Ermittlung der Zieladresse wird das ARP-Protokoll verwendet. Zuerst wird ein ARP-Paket mittels eines Broadcast an alle Stationen gesendet. Aus der Antwort geht entsprechend die Zieladresse hervor. Der Erfindung liegt die Aufgabe zugrunde, das Konfigurieren von Kommunikationsbeziehungen zwischen in einem Kommunikationsnetz angeordneten, zentralen und dezentralen Kommunikationseinrichtungen in der Art und Weise zu verbessern, dass keine Interaktion mit einem zentralen Management-System erforderlich ist. Die Aufgabe wird durch ein Verfahren und durch eine Kommunikationsanordnung gemäß den Merkmalen des Oberbegriffs der Patentansprüche 1 und 9 durch die jeweils kennzeichnenden Merkmale gelöst.

Beim erfindungsgemäßen Verfahren werden Kommunikationsbeziehungen zwischen in einem paketorientierten Kommunikationsnetz angeordneten, zumindest einer dezentralen und einer zentralen Kommunikationseinrichtung zugeordneten und jeweils eine kommunikationsnetzspezifische Adressinformation aufweisenden Kommunikationseinheiten konfiguriert. Der wesentliche Aspektdes erfindungsgemäßen Verfahrens besteht darin, dass durch die zumindest eine dezentrale Kommunikationseinrichtung oder durch die zumindest eine dieser zugeordnete Kommunikationseinheit zumindest ein jeweils die Adressinformation der Kommunikationseinheit aufweisendes Datenpaket gebildet und über das Kommunikationsnetz an die zentrale Kommunikationseinrichtung übermittelt wird. Durch die zentrale Kommunikationseinrichtung wird die in dem empfangenden Datenpaket enthaltene Adressinformation ermittelt, zumindest eine der zentralen Kommunikationseinrichtung zugeordnete Kommunikationseinheit selektiert und die ermittelten Adressinformationen der selektierten Kommunikationseinheit zugeordnet. Des weiteren wird durch die zentrale Kommunikationseinrichtung oder durch die zumindest eine selektierte Kommunikationseinheit zumindest ein jeweils die Adressinformation der selektierten Kommunikationseinheit aufweisendes Datenpaket gebildet und über das Kommunikationsnetz an die dezentrale Kommunikationseinrichtung übermittelt. Mit Hilfe der an die zentrale und die dezentrale Kommunikationseinrichtung übermittelten Adressinformationen wird die Kommunikationsbeziehung zwischen den adressierten Kommunikationseinheiten über das Kommunikationsnetz konfiguriert.

Der wesentliche Vorteil des erfindungsgemäßen Verfahrens besteht darin, dass für das Einrichten bzw. für die Konfigurierung der Kommunikationsbeziehungen zwischen in einem Kommunikationsnetz angeordneten Kommunikationseinheiten - z.B. Schnittstelleneinheiten oder Wandlerbausteinen - kein Management-System (zentral oder dezentral) erforderlich ist. Somit kann das erfindungsgemäße Verfahren bei der Initialisierung eines Kommunikationsnetzes - z.B. Hochlaufen des Systems - eingesetzt werden, da zu diesem Zeitpunkt noch keine Kommunikation mit einem zentralen Management-System möglich ist.

Erst nach Einrichten dieser Kommunikationsbeziehungen gemäß dem erfindungsgemäßen Verfahren kann beispielsweise das Management-System über die eingerichteten Kommunikationsbeziehungen über das Kommunikationsnetz kommunizieren. Durch das erfindungsgemäße Verfahren wird es ermöglicht, zum frühestmöglichen Zeitpunkt der Systeminitialisierung den an einer einzurichtenden Kommunikationsbeziehung beteiligten Kommunikationseinheiten bzw. Bausteinen die jeweils gegenseitigen kommunikationsnetzspezifischen Adressinformationen - auch als MAC-Adressen bezeichnet - zur Laufzeit bekannt zu machen, um somit eine wahlfreie Zuordnung für die Punkt-zu-Punkt-Verbindungen zu ermöglichen.

Vorteilhaft ist das paketorientierte Kommunikationsnetz gemäß den IEEE-Standard 802.3 ausgestaltet - Anspruch 6. Derartige auf Ethernet-Technologie basierende Kommunikationsnetze sind für den Massenmarkt im Umfeld lokaler Netze - LAN - und somit kostenoptimiert konzipiert. Mit Hilfe der Ethernet-Technologie können somit z.B. lokal in einer Netzeinrichtung intern angeordnete Kommunikationsnetze als kostengünstige Verdrahtung von beispielsweise zentralen und dezentralen Baugruppen - "Backplane" - eingesetzt werden.

Weitere vorteilhafte Ausgestaltungen des erfindungsgemäßen Verfahrens sowie eine Kommunikationsanordnung zur Durchführung des erfindungsgemäßen Verfahrens sind den weiteren Ansprüchen zu entnehmen.

Im folgenden wird das erfindungsgemäße Verfahren anhand zweier Zeichnungen näher erläutert. Dabei zeigen
- FIG 1: eine in einem Kommunikationsnetz angeordnete Kommunikationsanordnung zur Realisierung des erfindungsgemäßen Verfahrens
- FIG 2: eine alternative Ausgestaltungsvariante der in FIG 1 dargestellten Kommunikationsanordnung

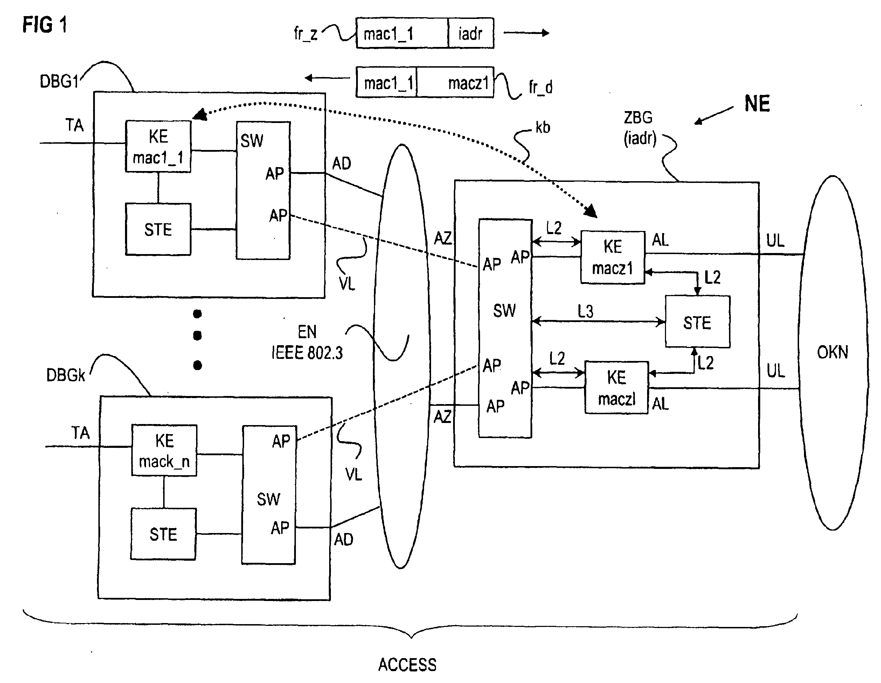

FIG 1 zeigt in einem Blockschaltbild eine in einem Teilnehmerzugangsnetz bzw. Access-Network ACCESS angeordnete, als Multiplexeinrichtung ausgestaltete Netzeinrichtung NE, an welche über mehrere in der Netzeinrichtung NE angeordnete, dezentrale Baugruppen DBG1...k und über mehrere Teilnehmeranschlüsse TA bzw. Teilnehmeranschlussleitungen die jeweiligen Teilnehmer - nicht dargestellt - an ein übergeordnetes Kommunikationsnetz OKN - beispielsweise ein ISDN-Kommunikationsnetz - angeschlossen sind. In der Netzeinrichtung NE ist ein gemäß dem IEEE-Standard 802.3 ausgestaltetes, "internes", paketorientiertes Kommunikationsnetz EN - im folgenden auch als "Ethernet" bezeichnet - angeordnet, über welches die jeweiligen dezentralen Baugruppen DBG1...k - im folgenden auch als dezentrale Kommunikationseinrichtungen bezeichnet - an eine zentrale Baugruppe ZBG - im folgenden auch als zentrale Kommunikationseinrichtung bezeichnet - angeschlossen sind. Die dezentralen Kommunikationseinrichtungen DBG1...k und die zentrale Kommunikationseinrichtung ZBG weisen jeweils eine an die Übertragungstechnologie des Kommunikationsnetzes EN angepasste Vermittlungseinrichtung SW - im folgenden als Ethernet-Switch bezeichnet - auf, wobei die Kommunikationseinrichtungen DBG1...k, ZBG über einen Anschlussport des Ethernet-Switch SW und einen dafür vorgesehenen Anschluss AD, AZ der jeweiligen Kommunikationseinrichtung DBG1...k, ZBG an das paketorientierte Kommunikationsnetz EN angeschlossen sind.

In diesem Ausführungsbeispiel weist jede dezentrale Kommunikationseinrichtung DBG1...k eine jeweils durch einen Wandlerbaustein KE repräsentierte Kommunikationseinheit KE auf. Jeder den Teilnehmeranschluß realisierende Wandlerbaustein KE umfasst Umwandlungsfunktionen zum Übergang zwischen z.B. auf der Teilnehmeranschlussleitung realisierter, zeitschlitzorientierter und der im Kommunikationsnetz realisierten paketorientierten Übertragungstechnologie - hier TDM/Ethernet. Jeder Wandlerbaustein KE ist mit dem jeweils in der dezentralen Kommunikationseinrichtung DBG1...k angeordneten Ethernet-Switch SW verbunden. Es sei angemerkt, dass jede dezentrale Kommunikationseinrichtung DBG1...k mehrere derartige Wandlerbausteine bzw. Kommunikationseinheiten KE aufweisen kann.

Des weiteren sei angemerkt, daß für den Fall daß der dezentralen Kommunikationseinrichtung DBG1...k nur eine Kommunikationseinheit KE zugeordnet ist, die dezentrale Kommunikationseinrichtung DBG1...k und die zugeordnete Kommunikationseinheit logisch zusammengefaßt werden können, also als identische bzw. logisch zusammengehörige Einheit betrachtet werden können.

Des weiteren sind in der zentralen Kommunikationseinrichtung ZBG ebenfalls mehrere Wandlerbausteine bzw. Kommunikationseinheiten KE angeordnet, welche jeweils mit dem in der zentralen Baugruppe ZBG angeordneten Ethernet-Switch SW verbunden sind. Alle Kommunikationseinheiten KE weisen jeweils eine die jeweilige Kommunikationseinheit KE im paketorientierten Kommunikationsnetz EN eindeutig identifizierende Adressinformation mac1_1...k_n, macz1...1 auf - auch als MAC-Adresse bezeichnet, Medium-Access-Control. Jede an das paketorientierte Kommunikationsnetz EN angeschlossene Kommunikationseinrichtung DBG1...k, ZBG weist eine Steuereinrichtung STE auf, welche mit den Komponenten der jeweiligen Kommunikationseinrichtung - also mit den jeweiligen Wandlerbausteinen KE und dem Ethernet-Switch SW - verbunden ist. Die in der zentralen Kommunikationseinrichtung ZBG angeordneten Wandlerbausteine KE weisen jeweils einen Anschluss AL auf, über welchen die jeweiligen Wandlerbausteine KE über entsprechende Ausgange UL der zentralen Kommunikationseinrichtung ZBG mit dem übergeordneten, in diesem Ausführungsbeispiel gemäß dem ISDN-Übertragungsverfahren ausgestalteten, Kommunikationsnetz OKN verbunden sind.

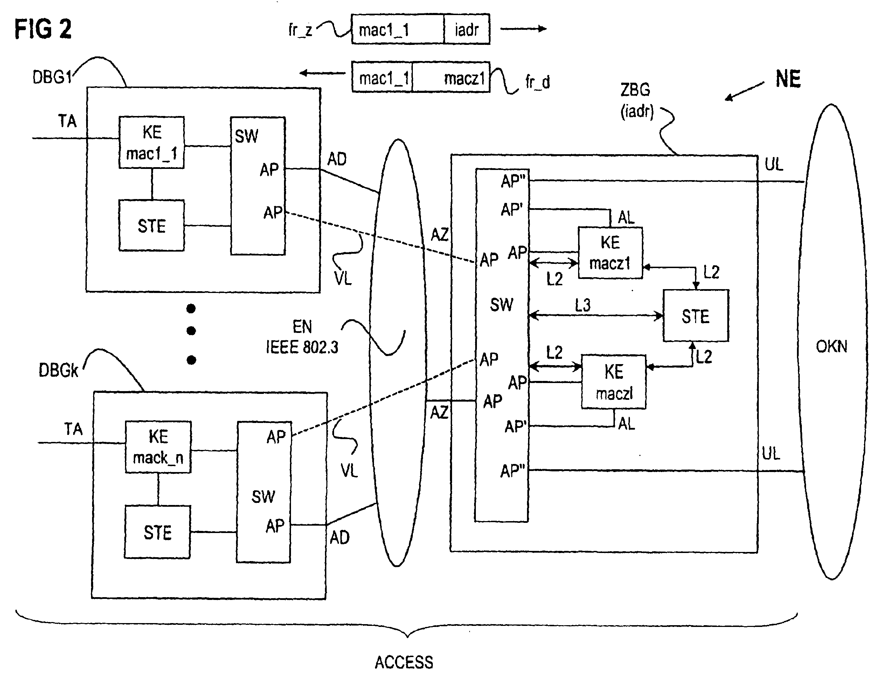

Gemäß einer alternativen, in FIG 2 dargestellten Ausgestaltungsvariante sind die Ausgänge AL der in der zentralen Kommunikationseinrichtung ZBG angeordneten Wandlerbausteine KE an entsprechende Anschlüsse AP' des in der zentralen Baugruppe ZBG angeordneten Ethernet-Switch SW rückgeführt, welcher über weitere Anschlüsse AP" mit dem übergeordneten Kommunikationsnetz OKN verbunden ist. Durch entsprechende Konfiguration werden Informationen zwischen den Wandlerbausteinen (KE) und dem übergeordneten Kommunikationsnetz (OKN) jeweils über den Ethernet-Switch SW und dessen Anschlüsse AP', AP'' übermittelt.

Im Rahmen einer Inbetriebnahme der im Blockschaltbild dargestellten Anordnung sollen nun Kommunikationsbeziehungen bzw. logische Punkt-zu-Punkt-Verbindungen zwischen den in den dezentralen und der zentralen Kommunikationseinrichtungen angeordneten Kommunikationseinheiten KE eingerichtet werden, über welche nach erfolgreicher Inbetriebnahme Nutzinformationen übermittelt werden.

Im folgenden wird der Ablauf des erfindungsgemäßen Verfahrens näher erläutert:
1. Bei einer Ausgestaltungsvariante des erfindungsgemäßen Verfahrens wird eine frei wählbare MAC-Adresse iadr - im folgenden auch als Initialisierungsadresse bezeichnet - als allen in den jeweiligen dezentralen und in der zentralen Kommunikationseinrichtung DBG1...k, ZBG angeordneten Steuereinheiten STE bekannt definiert. Im folgenden wird der Zeitpunkt der Initialisierung der im Blockschaltbild dargestellten Kommunikationsanordnung - auch als "Hochfahren" bzw. Booten des Systems bezeichnet - betrachtet. Nach der Initialisierung des Systems bzw. der Kommunikationsanordnung verhalten sich alle an das paketorientierte Kommunikationsnetz EN angeschlossenen Kommunikationseinrichtungen DBG1...k, ZBG passiv. Für das Ausführungsbeispiel sei weiterhin angenommen, dass im Rahmen der Initialisierung des Systems eine Kommunikationsbeziehung bzw. logische Punkt-zu-Punkt-Verbindung kb - im Blockschaltbild stellvertretend für viele durch einen strichlierten Doppelpfeil verdeutlicht - zwischen dem in der ersten Kommunikationseinrichtung DBG1 angeordneten Wandlerbaustein KE und einen in der zentralen Kommunikationseinrichtung ZBG angeordneten Wandlerbaustein KE eingerichtet werden soll.
2. Die in der ersten dezentralen Kommunikationseinrichtung DBG1 angeordnete Steuereinrichtung STE konfiguriert die Initialisierungsadresse iadr als (vorübergehende) Ziel-MAC-Adresse in der dieser zugeordneten Kommunikationseinheit KE. Des weiteren wird diese Initialisierungsadresse iadr in der Art und Weise im zugeordneten Ethernet-Switch konfiguriert, dass durch die Initialisierungsadresse iadr netzseitig der den Anschluss zum Kommunikationsnetz EN realisierende Anschlussport AP ausgewählt wird. Des weiteren sind alle im Kommunikationsnetz EN angeordneten Einheiten wie z.B. Switche per Voreinstellung so konfiguriert, dass die Initialisierungsadresse iadr aufweisende Datenpakete bzw. Ethernet-Frames in Richtung zentrale Kommunikationseinrichtung vermittelt werden.
3. Die in der zentralen Kommunikationseinrichtung ZBG angeordnete Steuereinheit STE konfiguriert die Initialisierungsadresse iadr im zugehörigen Ethernet-Switch SW als zu genau einem jeweils genau einem Wandlerbaustein KE zugeordneten Ausgangsport AP gehörig, so dass eine eindeutige Switching-Entscheidung sofort ohne "Flooding" und "Learning" gefällt werden kann. Gemäß dem vorliegenden Ausführungsbeispiel sind zwei Ausgestaltungsvarianten möglich: Zum einen wird ein eintreffendes die Initialisierungsadresse iadr als Zieladresse aufweisendes Datenpaket bzw. Ethernet-Frame über den Wandlerbaustein KE und über eine dafür vorgesehene Schnittstelle zur Steuereinheit STE vermittelt - im Blockschaltbild durch den Weg L1, L2 verdeutlicht. Zum anderen kann ein die Initialisierungsadresse iadr aufweisender Ethernet-Frame über eine speziell dafür vorgesehene Schnittstelle vom Ethernet-Switch SW direkt zur Steuereinheit STE vermittelt werden - im Blockschaltbild durch den Weg L3 verdeutlicht.
4. Nach der Initialisierung gemäß Schritt 2 beginnt der Wandlerbaustein KE der ersten dezentralen Kommunikationseinrichtung DBG1 zyklisch spezielle Datenpakete bzw. Ethernet-Frames - im Blockschaltbild schematisch durch ein Datenpaket fr_z dargestellt - an die Initialisierungsadresse iadr zu senden. Diese Ethernet-Frames fr_z können beispielsweise dahingehend ausgestaltet sein, dass sie sich in irgendeiner Form von einer normalen Nutzlast unterscheiden und damit klar als "Handshake" erkennbar sind. Dies kann beispielsweise damit erreicht werden, dass ein bestimmter Wert des im Ethernet-Standard definierten "Ethernet-Typ-Feldes" gesetzt wird. Dieser Wert ist, abgesehen von den im Standard bereits vorgesehenen bzw. reservierten Werten, frei wählbar. Des weiteren wird in die gebildeten Ethernet-Frames fr_z jeweils die MAC-Adresse - hier mac1_1 - des Wandlerbausteins KE als "Absenderadresse" eingefügt.
5. Der in der ersten dezentralen Kommunikationseinrichtung DBG1 angeordnete Ethernet-Switch SW leitet das so gebildete Datenpaket fr_z über den Anschlussport AP an das Ethernet EN weiter, da diese Switching-Entscheidung durch Schritt 2 eindeutig ist.
6. Das über das Kommunikationsnetz EN an die zentrale Baugruppe ZBG vermittelte Datenpaket fr_z wird durch den in der zentralen Kommunikationseinrichtung ZBG angeordneten Ethernet-Switch SW empfangen, wobei die im empfangenen Datenpaket fr_z enthaltene Absenderadresse mac1_1 ermittelt bzw. "gelernt" und durch den Ethernet-Switch SW aufgrund der in Schritt 3 beschriebenen Konfigurierung ebenfalls eine eindeutige Switching-Entscheidung gefällt wird. Das empfangene Datenpaket wird über einen der konfigurierten Anschlussports AP je nach gewählter Ausprägung entweder über den dargestellten Weg L1, L2 oder durch den alternativen Weg L3 an die Steuereinrichtung STE der zentralen Kommunikationseinrichtung ZBG weitervermittelt.
7. Die in der zentralen Kommunikationseinrichtung ZBG angeordnete Steuereinrichtung STE extrahiert aus dem empfangenen Datenpaket bzw. Ethernet-Frame fr_z die darin enthaltene Absender-MAC-Adresse (hier mac1_1) und selektiert einen der in der zentralen Kommunikationseinrichtung ZBG aktuell zur Verfügung stehenden und nicht zugeordneten Wandlerbaustein KE. Für dieses Ausführungsbeispiel sei angenommen, dass der Wandlerbaustein KE mit der zugehörigen MAC-Adresse maczl ausgewählt wird. Durch die Steuereinrichtung STE wird in dem selektierten Wandlerbaustein KE(macz1) die extrahierte Absender-MAC-Adresse (mac1_1) als Ziel für die Senderichtung der einzurichtenden Punkt-zu-Punkt-Verbindung implementiert. Des weiteren wird durch die Steuereinrichtung STE die MAC-Adresse des selektierten Wandlerbausteins (hier maczl) ermittelt, die widerrum der ersten dezentralen Kommunikationseinrichtung DBG1 als (endgültiges) Ziel mitgeteilt werden muss.
8. Die in der zentralen Kommunikationseinrichtung ZBG angeordnete Steuereinrichtung STE bildet (beispielsweise über den im Blockschaltbild dargestellten Weg L3) einen gleichermaßen "speziellen" Ethernet-Frame als Antwort auf den seitens der dezentralen Kommunikationseinrichtung DBG1 ausgesendeten Ethernet-Frame. Ziel dieses speziellen Ethernet-Frames bzw. Datenpaketes - im Blockschaltbild durch ein Datenpaket fr_d schematisch dargestellt - ist die erste dezentrale Kommunikationseinrichtung DBG1 bzw. die dieser dezentralen Kommunikationseinrichtung DBG1 zugeordnete Kommunikationseinheit bzw. Wandlerbaustein KE(mac1_1) - d.h. die gerade gelernte MAC-Adresse mac1_1 wird als Zielinformation in den gebildeten Ethernet-Frame fr_d eingefügt. Des weiteren wird dem speziellen Ethernet-Frame fr_d die Absender-MAC-Adresse des in Schritt 7 selektierten Wandlerbausteins (hier maczl) als Absenderadresse eingefügt. Alle beteiligten Ethernet-Switche SW haben die MAC-Adresse des der ersten dezentralen Kommunikationseinrichtung DBG1 zugeordneten Wandlerbausteins KE (mac1_1) gelernt und können für den Rückweg eine eindeutige Switching-Entscheidung treffen.
9. Der in der ersten dezentralen Kommunikationseinrichtung DBG1 angeordnete Ethernet-Switch SW extrahiert aus diesem empfangenen Datenpaket bzw. Antwort-Ethernet-Frame fr_d analog zu Schritt 3. Somit kann die Steuereinrichtung STE die im Ethernet-Frame enthaltene Absender-MAC-Adresse extrahieren und als endgültiges Ziel der einzustellenden bzw. konfigurierenden Punkt-zu-Punkt-Verbindung kb in dem ihr zugeordneten Wandlerbaustein KE konfigurieren.
10.Der in der ersten dezentralen Kommunikationseinrichtung DGB1 angeordnete Wandlerbaustein KE stoppt das zyklische Aussenden von Ethernet-Frames fr_z entsprechend Schritt 4, so dass nun der Transport der eigentlichen Nutzinformationen (Payload) über die mit Hilfe des erfindungsgemäßen Verfahrens eingerichteten Kommunikationsbeziehung kb beginnen kann.

Gemäß einer alternativen Ausgestaltungsvariante der in Blockschaltbild dargestellten Kommunikationsanordnung können die jeweiligen dezentralen Kommunikationseinrichtungen DBG1...k jeweils über eine das Kommunikationsnetz EN realisierende Verbindungsleitung an die zentrale Kommunikationseinrichtung ZBG angeschlossen sein - im Blockschaltbild jeweils durch eine strichlierte Verbindungsleitung VL verdeutlicht. Über diese Verbindungsleitungen VL werden alle durch die dezentralen Kommunikationseinrichtungen DBG1...k ausgesendeten Datenpakete automatisch an die zentrale Kommunikationseinrichtung ZBG vermittelt bzw. geroutet. Es sei angemerkt, dass bei einer derartigen Anordnung die bisher für das erfindungsgemäße Verfahren vorgesehene wahlfreie MAC-Adresse bzw. Initialisierungsadresse iadr nicht erforderlich ist, da alle Datenpakete ohne Switching-Entscheidungen über die Verbindungsleitungen von den dezentralen Kommunikationseinrichtungen DBG1...k an die zentrale Kommunikationseinrichtung ZBG vermittelt bzw. übermittelt werden und damit die Initialisierungsadresse als Zielinformation bzw. Routinginformation für die Ethernet-Frames nicht erforderlich ist. Bei dieser Ausgestaltungsvariante müssen somit nur die MAC-Adressen der jeweiligen die Endpunkte der einzurichtenden Punkt-zu-Punkt-Verbindungen darstellenden Wandlerbausteine KE - also mac1_1...k_n, macz1...1 - in beschriebener Art und Weise eingefügt und übermittelt werden. Das Nichtverwenden von Routinginformationen bei Ethernet-Frames wäre jedoch nicht standardkonform (z.B. gemäß IEEE 802.3) so dass das erfindungsgemäße Verfahren nicht mit standardkonformen Bauelementen realisierbar wäre. Eine mit höherem Aufwand verbundene, proprietäre Anpassung wäre erforderlich, wobei bei dieser Ausgestaltungsvariante trotzdem jegliche Art von Management (zentral oder dezentral) eingespart werden kann.

Das erfindungsgemäße Verfahren ermöglicht es, eine Systemkonfiguration ohne Mitwirkung eines zentralen Management-Systems dynamisch zu konfigurieren und hochzufahren. Das im Ausführungsbeispiel näher dargestellte Verfahren verwendet ausschließlich Mittel gemäß dem Ethernet-Standard und kommt ohne Broadcasts aus, welche insbesondere im Umfeld von durch unterschiedliche Netzbetreiber betriebene Kommunikationsnetze aus Gründen der klaren Datenseparierung als ungeeignet angesehen werden. Das erfindungsgemäße Verfahren benötigt mit Ausnahme der oben beschriebenen Ausgestaltungsvariante eine einzige feste, jedoch frei wählbare MAC-Adresse bzw. Initialisierungsadresse um eine prinzipiell unbegrenzte Anzahl von Punkt-zu-Punkt-Verbindungen konfigurieren zu können.

## Patentansprüche

1. Verfahren zum Konfigurieren von Kommunikationsbeziehungen (kb) zwischen in einem paketorientierten Kommunikationsnetz (EN) angeordneten, zumindest einer dezentralen und einer zentralen Kommunikationseinrichtung (DBG1...k, ZBG) zugeordneten und jeweils eine kommunikationsnetzspezifische Adressinformation (mac1_1...k_n, macz1...1) aufweisenden Kommunikationseinheiten (KE),
**dadurch gekennzeichnet,**
- **dass** durch die zumindest eine dezentrale Kommunikationseinrichtung (DBG1...k) oder durch die zumindest eine dieser zugeordnete Kommunikationseinheit (KE) zumindest ein jeweils die Adressinformation (mac1_1...k_n) der Kommunikationseinheit (KE) aufweisendes Datenpaket (fr_z) gebildet und über das Kommunikationsnetz (EN) an die zentrale Kommunikationseinrichtung (ZBG) übermittelt wird,
- **dass** durch die zentrale Kommunikationseinrichtung (ZBG) die in dem empfangenen Datenpaket (fr_z) enthaltene Adressinformation (mac1_1...k_n) ermittelt, zumindest eine der zentralen Kommunikationseinrichtung (ZBG) zugeordnete Kommunikationseinheit (KE) selektiert und die ermittelte Adressinformation (mac1_1...k_n) der selektierten Kommunikationseinheit (KE) zugeordnet wird,
- **dass** durch die zentrale Kommunikationseinrichtung (ZBG) oder durch die zumindest eine selektierte Kommunikationseinheit (KE) zumindest ein jeweils die Adressinformation (macz1...1) der selektierten Kommunikationseinheit (KE) aufweisendes Datenpaket (fr_d) gebildet und über das Kommunikationsnetz (EN) an die dezentrale Kommunikationseinrichtung (DBG1...k) übermittelt wird,
- **dass** mit Hilfe der an die zentrale und die dezentrale Kommunikationseinrichtung (DBG1...k, ZBG) übermittelten Adressinformationen (mac1_1...k_n, macz1...1) die Kommunikationsbeziehung (kb) zwischen den adressierten Kommunikationseinheiten (KE) über das Kommunikationsnetz (EN) konfiguriert wird.

2. Verfahren nach Anspruch 1,
**dadurch gekennzeichnet,**
- **dass** eine die zentrale Kommunikationseinrichtung (ZBG) im Kommunikationsnetz (EN) eindeutig adressierende Initialisierungsadresse (iadr) vorgesehen ist, welche in das zumindest eine an die zentrale Kommunikationseinrichtung (ZBG) zu übermittelnde Datenpaket (fr_z) als Zielinformation eingefügt ist,
- **dass** das zumindest eine Datenpaket (fr_z) mit Hilfe der eingefügten Initialisierungsadresse (iadr) über das Kommunikationsnetz (EN) an die zentrale Kommunikationseinrichtung (ZBG) vermittelt wird.

3. Verfahren nach Anspruch 1 oder 2,
**dadurch gekennzeichnet,**
- **dass** in das zumindest eine an die zumindest eine dezentrale Kommunikationseinheit (DBG1...k) zu übermittelnde Datenpaket (fr_d) die ermittelte und der selektierten Kommunikationseinheit (KE) zugeordnete Adressinformation (mac1_1...k_n) als Zielinformation eingefügt ist,
- **dass** das zumindest eine Datenpaket (fr_d) mit Hilfe der eingefügten Adressinformation (mac1_1...k_n) über das Kommunikationsnetz (KN) an die zumindest eine dezentrale Kommunikationseinheit (DBG1...k) vermittelt wird.

4. Verfahren nach einem der vorherigen Ansprüche,
**dadurch gekennzeichnet,**
**dass** in das zumindest eine an die zumindest eine dezentrale Kommunikatianseinheit (DBG1...k) zu übermittelnde Datenpaket (fr_d) die Adressinformation (macz1...1) der selektierten Kommunikationseinheit (KE) als Absenderadresse eingefügt ist.

5. Verfahren nach einem der vorherigen Ansprüche,
**dadurch gekennzeichnet,**
**dass** die zumindest eine dezentrale Kommunikationseinrichtung (DBG1...k) über zumindest eine das Kommunikationsnetz realisierende Verbindungsleitung an die zentrale Kommunikationseinrichtung (ZBG) angeschlossen ist.

6. Verfahren nach einem der vorherigen Ansprüche,
**dadurch gekennzeichnet,**
**dass** das Kommunikationsnetz (EN) als rahmen- oder paketorientiertes Kommunikationsnetz gemäß dem IEEE-Standard IEEE 802.3 ausgestaltet ist.

7. Verfahren nach einem der vorherigen Ansprüche,
**dadurch gekennzeichnet,**
**dass** die zentrale und die zumindest eine dezentrale Kommunikationseinrichtung (ZBG, DBG1...k) jeweils eine gemäß dem IEEE-Standard 802.3 ausgestaltete Vermittlungseinheit (SW) umfassen, über welche die jeweils den Kommunikationseinrichtungen (ZBG, DBG1...k) zugeordneten Kommunikationseinheiten (KE) an das Kommunikationsnetz (EN) angeschlossen sind.

8. Verfahren nach einem der vorherigen Ansprüche,
**dadurch gekennzeichnet,**
**dass** die zumindest eine konfigurierte Kommunikationsbeziehung (kb) eine oder mehrere logische Punkt-zu-Punkt-Verbindungen umfasst.

9. Kommunikationsanordnung zum Konfigurieren von Kommunikationsbeziehungen zwischen in einem paketorientierten Kommunikationsnetz (EN) angeordneten, zumindest einer dezentralen und einer zentralen Kommunikationseinrichtung (DBG1...k, ZBG) zugeordneten und jeweils eine kommunikationsnetzspezifische Adressinformation (mac1_1...k_n, macz1_1) aufweisenden Kommunikationseinheiten (KE),
**dadurch gekennzeichnet,**
- **dass** die zumindest eine dezentrale Kommunikationseinrichtung (DBG1...k) oder die zumindest eine dieser zugeordnete Kommunikationseinheit (KE) Steuermittel (STE, SW)
zur Bildung zumindest eines jeweils die Adressinformation (mac1_1...k_n) der Kommunikationseinheit (KE) aufweisenden Datenpaketes und
-- zur Weiterleitung des zumindest einen gebildeten Datenpaketes an das Kommunikationsnetz (EN) umfasst,
- **dass** die zentrale Kommunikationseinrichtung (ZBG) und/oder die zumindest eine dieser zugeordnete Kommunikationseinheit Steuermittel (STE, SW)
-- zur Ermittlung der in dem zumindest einem empfangenen Datenpaket enthaltenen Adressinformation (mac1_1...k_n),
-- zur Selektion zumindest einer der zentralen Kommunikationseinrichtung (ZBG) zugeordneten Kommunikationseinheit (KE),
-- zur Zuordnung der ermittelten Adressinformation (mac1_1...k_n) zu der selektierten Kommunikationseinheit (KE),
-- zur Bildung zumindest eines jeweils die Adressinformation (macz1_1) der selektierten Kommunikationseinheit (KE) aufweisendes Datenpaketes, und
-- zur Übermittlung des gebildeten Datenpaketes über das Kommunikationsnetz (EN) an die zumindest eine dezentrale Kommunikationseinrichtung (DBG1...k)
umfasst,
- **dass** die Steuereinheiten (STE, SW) derart ausgestaltet sind, dass mit Hilfe der an die zentrale und die dezentrale Kommunikationseinrichtung (DBG1...k, ZBG) übermittelten Adressinformationen (mac1_1...k_n, macz1_1) die Kommunikationsbeziehung zwischen den adressierten Kommunikationseinheiten (KE) über das Kommunikationsnetz (EN) konfiguriert wird.

10. Kommunikationsanordnung nach Anspruch 9,
**dadurch gekennzeichnet,**
**dass** die zumindest eine dezentrale und die zentrale Kommunikationseinrichtung (DBG1...k, ZBG) und das Kommunikationsnetz (EN) Bestandteil einer in einem übergeordneten Kommunikationsnetz (OKN) anordenbaren Netzeinrichtung (NE) sind.

11. Kommunikationsanordnung nach Anspruch 10,
**dadurch gekennzeichnet,**
**dass** die zumindest eine dezentrale und die zentrale Kommunikationseinrichtung (DBG1...k, ZBG) jeweils als in der Netzeinrichtung (NE) angeordnete Baugruppen ausgestaltet sind.

## Revendications

1. Procédé pour la configuration de liaisons de communication (kb) entre des unités de communication (KE) disposées dans un réseau de communication (EN) orienté paquet, au moins un dispositif de communication décentralisé et un dispositif de communication centralisé (DBG1...k, ZBG) et présentant respectivement une information d'adresse (mac1_1...k_n, macz1...1) spécifique à la communication,
**caractérisé en ce que**
- au moins un paquet de données (fr_z) présentant respectivement l'information d'adresse (mac1_1...k_n) de l'unité de communication (KE) est formé par le au moins un dispositif de communication décentralisé (DBG1...k) ou par la au moins une unité de communication (KE) attribuée à ce dispositif et transmis par le réseau de communication (EN) au dispositif de communication centralisé (ZBG),
- **en ce que** l'information d'adresse (mac1_1...k_n) contenue dans le paquet de données (fr_z) reçu est déterminée par le dispositif de communication centralisé (ZBG), au moins une unité de communication (KE) attribuée au dispositif de communication centralisé (ZBG) est sélectionné et l'information d'adresse (mac1_1...k_n) déterminée est attribuée à l'unité de communication (KE) sélectionnée,
- **en ce qu'**au moins un paquet de données (fr_d) présentant l'information d'adresse (macz1...1) de l'unité de communication (KE) sélectionnée est formé par le dispositif de communication centralisé (ZBG) ou par la au moins une unité de communication (KE) sélectionnée et est transmis par le réseau de communication (EN) au dispositif de communication décentralisé (DBG1...k),
- **en ce que** la liaison de communication (kb) entre les unités de communication (KE) adressées est configurée par le réseau de communication (EN) à l'aide des informations d'adresse (mac1_1...k_n, macz1...1) transmises aux dispositifs de communication centralisé et décentralisé (DBG1...k, ZBG).

2. Procédé selon la revendication 1,
**caractérisé en ce que**
- il est prévu une adresse d'initialisation (iadr) adressant clairement le dispositif de communication centralisé (ZBG) dans le réseau de communication (EN), adresse qui est insérée dans le au moins un paquet de données (fr_z) à transmettre au dispositif de communication centralisé (ZBG) comme information de destination,
- **en ce que** le au moins un paquet de données (fr_z) est transmis au dispositif de communication centralisé (ZBG) par le réseau de communication (EN) à l'aide de l'adresse d'initialisation (iadr) insérée.

3. Procédé selon la revendication 1 ou 2,
**caractérisé en ce que**
- l'information d'adresse (mac1_1...k_n) déterminée et attribuée à l'unité de communication (KE) sélectionnée est insérée comme information de destination dans le au moins un paquet de données (fr_d) à transmettre à la au moins une unité de communication décentralisée (DBG1...k),
- **en ce que** le au moins un paquet de données (fr_d) est transmis à la au moins une unité de communication décentralisée (DBG1...k) par le réseau de communication à l'aide de l'information d'adresse (mac1_1...k_n) insérée.

4. Procédé selon l'une quelconque des revendications précédentes,
**caractérisé en ce que**
l'information d'adresse (macz1...1) de l'unité de communication (KE) sélectionnée est insérée comme adresse d'expéditeur dans le au moins un paquet de données (fr_d) à transmettre à la au moins une unité de communication décentralisée (DBG1...k).

5. Procédé selon l'une quelconque des revendications précédentes,
**caractérisé en ce que**
le au moins un dispositif de communication décentralisé (DBG1...k) est raccordé par au moins une ligne de liaison réalisant le réseau de communication au dispositif de communication centralisé (ZBG).

6. Procédé selon l'une quelconque des revendications précédentes,
**caractérisé en ce que**
le réseau de communication (EN) est conçu comme réseau de communication orienté cadre ou orienté paquet selon le standard IEEE 802.3.

7. Procédé selon l'une quelconque des revendications précédentes,
**caractérisé en ce que**
le dispositif de communication centralisé et le au moins un dispositif de communication décentralisé (ZBG, DBG1...k) comprennent respectivement une unité de transmission (SW) conçue selon le standard IEEE 802.3, par laquelle les unités de communication (KE) attribuées à chaque fois aux dispositifs de communication (ZBG, DBG1...k) sont raccordées au réseau de communication (EN).

8. Procédé selon l'une quelconque des revendications précédentes,
**caractérisé en ce que**
la au moins une liaison de communication (kb) configurée comprend une ou plusieurs liaisons point-à-point logiques.

9. Dispositif de communication pour configurer des liaisons de communication entre des unités de communication (KE) disposées dans un réseau de communication (EN) orienté paquet, attribuées au moins à un dispositif de communication décentralisé et un dispositif de communication centralisé (DBG1...k, ZBG) et présentant respectivement une information d'adresse (mac1_1...k_n, macz1_1) spécifique au réseau de communication,
**caractérisé en ce que**
- le au moins un dispositif de communication décentralisé (DBG1...k) ou la au moins une unité de communication (KE) attribuée à ce dispositif comprend des moyens de commande (STE, SW)
- - pour la formation d'au moins un paquet de données présentant respectivement l'information d'adresse (mac1_1...k_n) de l'unité de communication (KE) et
- - pour la transmission du au moins un paquet de données formé au réseau de communication (EN),
- **en ce que** le dispositif de communication centralisé (ZBG) et/ou la au moins une unité de communication attribuée à ce dispositif comprend des moyens de commande (STE, SW)
- - pour la détermination de l'information d'adresse (mac1_1...k_n) contenue dans le au moins un paquet de données reçu,
- - pour la sélection d'au moins une unité de communication (KE) attribuée au dispositif de communication centralisé (ZBG),
- - pour l'attribution de l'information d'adresse (mac1_1...k_n) déterminée à l'unité de communication (KE) sélectionnée,
- - pour la formation d'au moins un paquet de données présentant respectivement l'information d'adresse (macz1_1) de l'unité de communication (KE) sélectionnée, et
- - pour la transmission du paquet de données formé via le réseau de communication (EN) à au moins un dispositif de communication décentralisé (DBG1...k),
- **en ce que** les unités de commande (STE, SW) sont conçues de telle sorte que la liaison de communication entre les unités de communication (KE) adressées est configurée via le réseau de communication (EN) à l'aide des informations d'adresse (mac1_1...k_n, macz1_1) transmises au dispositif de communication centralisé et au dispositif de communication décentralisé (DBG1...k, ZBG).

10. Dispositif de communication selon la revendication 9,
**caractérisé en ce que**
le au moins un dispositif de communication décentralisé et le dispositif de communication centralisé (DBG1...k, ZBG) et le réseau de communication (EN) font partie d'un dispositif de réseau (NE) pouvant être disposé dans un réseau de communication (OKN) prioritaire.

11. Dispositif de communication selon la revendication 10,
**caractérisé en ce que**
le au moins un dispositif de communication décentralisé et le dispositif de communication centralisé (DBG1...k, ZBG) sont conçus respectivement comme des ensembles disposés dans le dispositif de réseau (NE).

## Claims

1. Method for the configuration of communication relationships (kb) between communication units (KE) arranged in a packet-oriented communications network (EN), said communications units being assigned to at least one remote and one central communication device (DBG1...k, ZBG) and each having communications-network-specific address information
(mac1_1...k_n, macz1...1),
**characterised in that**
- a data packet (fr_z) comprising the respective address information (mac1_1...k_n) of the communication unit (KE) is generated by at least one remote communication device (DBG1 ... k) or by at least one communication unit(KE) that is assigned to said device and is transmitted to the central communication device (ZBG) via the communications network (EN), and **in that**
- the central communication device (ZBG) identifies the address information (mac1_1...k_n) contained in the received data packet (fr_z), selects at least one communication unit (KE) assigned to the central communication device (ZBG), and assigns the identified address information (mac1_1...k_n) to the selected communication unit (KE), and **in that**
- the central communication device (ZBG) or at least one selected communication unit (KE) generates at least one data packet (fr_d) which comprises the respective address information (macz1...1) of the selected communication unit (KE), and transmits said data packet to the remote communication device (DBG1...k) via the communications network (EN), and **in that**
- the communication relationship (kb) between the addressed communication units (KE) is configured via the communications network (EN) with the aid of the address information (mac1_1...k_n, macz1...1) transmitted to the central and the remote communication device (DBG1...k, ZBG).

2. Method according to claim 1,
**characterised in that**
- an initialisation address (iadr) that uniquely addresses the central communication device (ZBG) in the communications network (EN), is provided, said initialisation address being inserted as destination information in at least one data packet (fr_z) to be transmitted to the central communication device (ZBG), and **in that**
- at least one data packet (fr_z) is switched to the central communication device (ZBG) with the help of the inserted initialisation address (iadr) via the communications network (EN).

3. Method according to claim 1 or 2,
**characterised in that**
- the address information (mac1_1...k_n) that is identified and is assigned to the selected communication unit (KE) is inserted as destination information in at least one data packet (fr_d) to be transmitted to at least one communication unit (DBG1...k), and **in that**
- at least one data packet (fr_d) is switched to at least one remote communication unit (DBG1...k) with the help of the inserted address information (mac1_1...k_n) via the communications network (KN).

4. Method according to one of the preceding claims,
**characterised in that**
the address information (macz1...1) of the selected communication unit (KE) is inserted as the originating address in at least one data packet (fr_d) to be transmitted to at least one remote communication unit (DBG1...k).

5. Method according to one of the preceding claims,
**characterised in that**
at least one remote communication device (DBG1...k) is connected to the central communication device (ZBG) via at least one connection line implementing the communications network.

6. Method according to one of the preceding claims,
**characterised in that**
the communications network (EN) is configured as a frame-oriented or packet-oriented communications network according to IEEE standard IEEE 802.3.

7. Method according to one of the preceding claims,
**characterised in that**
the central communication device and at least one remote communication device (ZBG, DBG1...k) each incorporates a switching unit (SW) configured according to IEEE standard 802.3, via which the communication units (KE) that are respectively assigned to the communication devices (ZBG, DBG1...k) are connected to the communications network (EN).

8. Method according to one of the preceding claims,
**characterised in that**
at least one configured communication relationship (kb) incorporates one or more logical point-to-point connections.

9. Communication arrangement for the configuration of communication relationships between communication units (KE) which are arranged in a packet-oriented communications network (EN), are assigned to at least one remote and one central communication device (DBG1...k, ZBG), and each of which has communications-network-specific address information
(mac1_1...k_n, macz1_1),
**characterised in that**
- at least one remote communication device (DBG1...k) or at least one communication unit (KE) assigned to said communication device, incorporates a means of control (STE, SW)
-- in order to generate at least one data packet having the address information (mac1_1...k_n) of the respective communication unit (KE), and
-- in order to forward at least one generated data packet to the communications network (EN), and **in that**
- the central communication device (ZBG) and/or at least one communication unit assigned to said communication device incorporates a means of control (STE, SW),
-- in order to identify the address information (mac1_1...k_n) contained in at least one received data packet,
-- in order to select at least one communication unit (KE) assigned to the central communication device (ZBG),
-- in order to assign the identified address information (mac1_1...k_n) to the selected communication unit (KE),
-- in order to generate at least one data packet having the address information (macz1_1) of the respective selected communication unit (KE), and
-- in order to transfer the generated data packet to at least one remote communication device (DBG1...k) via the communications network (EN), and **in that**
- the control units (STE, SW) are configured such that, with the aid of the address information (mac1_1...k_n, macz1_1) transmitted to the central and the remote communication device (DBG1...k, ZBG), the communication relationship between the addressed communication units (KE) is configured via the communications network (EN).

10. Communication arrangement according to claim 9,
**characterised in that**
at least one remote communication device and the central communication device (DBG1...k, ZBG), and the communications network (EN), are part of a network device (NE) that can be arranged in a higher-level communications network (OKN).

11. Communication arrangement according to claim 10,
**characterised in that**
at least one remote communication device and the central communication device (DBG1...k, ZBG) are configured respectively as modules arranged in the network device (NE).
